# EUROPEAN PATENT APPLICATION

(11) **EP 3 882 440 A1**
(43) Date of publication of application: **22.09.2021**
(21) Application number: 20164090.1
(22) Date of filing: 19.03.2020
(51) Int. Cl.: F01N 3/20, F01N 9/00

(54) **DEVICE AND METHOD FOR PROVIDING A REDUCING AGENT**

(71) Applicant: Winterthur Gas & Diesel Ltd., 8401 Winterthur (CH)
(72) Inventor: Plüss, Alain, 8400 Winterthur (CH)
(74) Representative: Hepp Wenger Ryffel AG

(57) **Abstract**

The present invention is related to a device and method for providing a reducing agent, an exhaust aftertreatment system and a combustion machine. The device (1) comprises at least one reducing agent providing section (2), preferably comprising at least one reactor (3b) having a heating system (4) with a heating control unit (5) and a heating element (6) for heating at least an inner volume and/or a content (7) of the reactor (3b), and preferably comprising a reductant supply unit (3a) for a reducing agent liquid. The device (1) further comprises a supply system (8),
which is suitable for dispensing a reducing agent gas, preferably containing ammonia, and a reducing agent liquid, preferably comprising urea, to the exhaust gas.

The reducing agent providing section (2) and/or the supply system (8) are adjustable to dispense the reducing agent gas and/or the reducing agent liquid, to the exhaust gas.

## Description

The present invention is related to a device and method for providing a reducing agent, an exhaust aftertreatment system and a combustion machine.

The invention relates to the technical field of combustion engines and the reduction of their emissions.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally flushed two-stroke engine.

The term internal combustion engine also refers to large engines which can be operated not only in diesel mode, which is characterized by the self-ignition of the fuel, but also in Otto mode, which is characterized by the positive ignition of the fuel, or in mixtures of the two. Furthermore, the term internal combustion engine includes in particular dual-fuel engines and large engines in which the self-ignition of the fuel is used for the positive ignition of another fuel.

Engine speed is preferably below 800 RPM, especially for 4-stroke engines, and more preferably below 200 RPM, especially for 2-stroke engines, which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquefied Biogas), biological fuels (e. g. oil made from algae or seaweed), ammonia, hydrogen, synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines. In case of liquid fuel, like heavy fuel oil, marine diesel oil, diesel or other liquids, as well as in case of gaseous fuels, like LNG, LPG or others, being burned by the engine, the exhaust from this combustion process needs to be cleaned to comply with the existing rules such as IMO Tier III.

The IMO emission standards commonly referred to as Tier I ... III standards inter alia define the NOₓ emission standards for existing and new marine engines.

For large ships the emissions requirements have been increasing, in particular with regard to the nitrogen oxides emissions. Thus, there is a need to reduce the amount of nitrogen oxides in the exhaust gas emitted by the internal combustion engines of these ships.

SCR (selective catalytic reduction) technology is used to reduce the level of nitrogen oxides (NOₓ) in an exhaust gas of a combustion engine. SCR is commonly used in land-based engines, e.g. heavy-duty vehicles, industrial plants and other applications. SCR technology has also been used in marine environments in combination with two-stroke diesel engines. Due to regulatory requirements for said marine diesel engines and land based engines, there is an increased need for efficient SCR systems.

SCR may be based on the reduction of nitrogen oxides in an exhaust gas with a reducing agent, such as ammonia (NH₃), in gaseous form as a reducing agent gas, or in solution, e.g. aqueous solution, or as urea.

Typically, ammonia is generated by injecting a reducing agent liquid, for example a liquid reductant agent precursor substance, such as a urea solution, into the exhaust gas of the combustion engine. The urea solution for example is sprayed via nozzles into the hot exhaust gas, where the liquid urea solution reacts to a gaseous reducing agent, namely ammonia, carbon dioxide and water vapour. The ammonia then reduces the nitrogen oxides under the influence of a catalyst in an SCR reactor to nitrogen (N₂) and water (H₂O). The generation of ammonia from liquid urea is endothermic. Thus, decomposition of the urea solution is only complete and the nitrogen oxides (NOₓ) are only reduced to nitrogen (N₂), if the exhaust gas is sufficiently hot. The lower the exhaust gas temperature, the longer is the residence time required for sufficient mixing with the exhaust gas and decomposition within the exhaust gas.

Application EP17196592.4, published as EP 3460639 A, which is incorporated by reference, discloses a compact device for generating a reducing agent gas from a solid or liquid reducing agent, such as a reductant agent precursor substance. A reducing agent solution is heated and reacted to gaseous ammonia, which is injected into an exhaust gas of a combustion engine.

To operate high and low temperature exhaust gases, the combustion engine may comprise a device for injecting a liquid reductant agent precursor substance and a device for generating and injecting a reducing agent gas. The provision of two devices needs extra space.

It is therefore an object of the present invention to prevent the drawbacks of the prior art and in particular to create a device and a method for providing a reducing agent, an exhaust aftertreatment system and a combustion machine ensuring a minimized emission of side-reaction products, such as N₂O and SO₃ and/or a reduced dosing of a reducing agent, such as ammonia or an ammonia precursor substance, a compact arrangement of the exhaust aftertreatment system and the reactor and a lower energy consumption.

The object is achieved by the characteristics of the independent claims.

A device for providing a reducing agent comprises at least one reducing agent providing section.

The reducing agent preferably provides for reduction of a pollutant, in particular NOₓ, in an exhaust gas of a combustion engine.

The reducing agent providing section preferably comprises at least one reactor for generating a reducing agent gas and/or a heated reducing agent liquid.

The reactor preferably comprises a heating system with a heating control unit and a heating element. At least one of an inner volume of the reactor and a content of the reactor, such as the reducing agent and/or a reducing agent precursor substance, may be heated.

The reactor may comprise a first and a second heating zone. The first and the second heating zone each comprise at least one heating element and the first and second heating zones may be controllable independently of each other by the heating control unit.

The heating system preferably is an electrical heating system and may comprise electrical heating rods. The heating rods may be U-shaped. Heating rods are advantageous, since they may extend through the inner volume and thereby provide a large surface area for heating the inner volume.

The reactor preferably is adapted for decomposing a reducing agent liquid or a reducing agent precursor substance into a reducing agent gas, for example urea into a gas mixture containing NH₃, CO₂ and H₂O.

The heating system may be arranged in the reactor.

The reducing agent providing section preferably comprises a reductant supply unit for a reducing agent liquid. Reducing agent liquid may be guided from the reductant supply unit directly to the exhaust gas and/or to the reactor.

The reductant supply unit may comprise a reservoir for storing the reducing agent liquid and/or a pipeline for guiding the reducing agent liquid.

The reductant supply unit and the reactor may be arranged in a common housing or may be arranged separately.

Since the reducing agent liquid may be fed from the reductant supply unit directly to the exhaust gas, it is not necessary for the entire reducing agent liquid to be passed through the reactor. The reactor may only be used when needed, preferably at lower exhaust gas temperatures. Thus, the dimensions of the reactor may be chosen to be as compact as possible.

The device further comprises a supply system, which is suitable for dispensing a reducing agent gas, preferably containing ammonia, and a reducing agent liquid, preferably comprising urea.

The supply system is adjustable to dispense either a reducing agent gas or a reducing agent liquid or a reducing agent gas and a reducing agent liquid to the exhaust gas.

In particular, the supply system is adjustable to dispense the reducing agent liquid from the reductant supply unit directly to the exhaust gas without passing the reducing agent liquid through the reactor. Alternatively, the supply system is adjustable to pass the complete reducing agent through the reactor.

The supply system may comprise pipelines, valves, pumps and/or nozzles.

Thus, a reducing agent liquid, a heated reducing agent liquid and/or a reducing agent gas may be supplied by a single device. The heated reducing agent liquid and the reducing agent gas may only be provided if needed.

As regularly non heated urea is injected into the exhaust gas, the exhaust gas system needs to provide certain extra space and/or residence time for allowing the urea to heat and to decompose upstream of the SCR reactor for cases, where the exhaust gas is not warm enough to heat up the urea quickly. The lower the exhaust gas temperature, the longer is the necessary residence time required for sufficient decomposition and mixing.

Since the reducing agent may be heated up and be decomposed by the device, such extra space is not necessary any more.

At high engine loads and respective higher exhaust gas temperatures the reducing agent may be injected without heating up directly into the SCR Reactor at least into the immediate vicinity of the SCR reactor upstream of the SCR reactor.

At lower engine loads heated reducing agent liquid or reducing agent gas may be provided.

Thus, the reducing agent may be prepared in an appropriate form in the reducing agent providing section.

The device further may comprise a mixing unit which is adapted to circulate the reducing agent in the reactor and/or in a reductant supply unit of the providing section, preferably during heating.

Further preferred, the device may comprise one or more direct or indirect temperature sensor(s) and the heating control unit is adapted keep a temperature in the inner volume of the reactor at a pre-set temperature. Thereby, constant reaction conditions are provided.

The device may comprise a storage tank for providing a stock of a reducing agent liquid, a reducing agent solid, a reducing agent gas and/or of reducing agent precursor substance.

The device hence may provide a stock of a reducing agent gas and/or a heated reducing agent liquid. Additionally or alternatively the reducing agent gas and/or a heated the reducing agent liquid may be produced in a the reactor on demand.

In a preferred embodiment the device may comprise a plurality of providing sections. Thereby, a throughput is increased.

The device further comprises a control unit adapted for selection of in an injection mode, wherein at least a first injection mode corresponds to providing a reducing agent liquid and a second injection mode corresponds to providing a reducing agent gas. The control unit may be adapted to offer selection of further injection modes, wherein a reducing agent liquid heated to a selected temperature is dispensed.

The control unit has at least one inputline for receiving an input signal, preferably an input signal from a measuring unit.

The input signal may also be provided by an engine control unit, for example for transmitting information related to the engine load, and/or by an input terminal, for example for allowing a user to give instructions.

The control unit has a processor unit. The control unit has at least one outputline for sending a control signal for adjusting the supply system and/or the reducing agent providing section to dispend a reducing agent liquid and/or a reducing agent gas.

By determining the control signal a respective injection mode is selected.

The control unit may hence adjust the supply system and/or the reducing agent providing section for delivering a reducing agent liquid or a reducing agent gas to the exhaust gas.

For example the at least one output line may set at least one valve to allow guidance of reducing agent liquid or a reducing agent gas to the exhaust gas. For example valves may be set, such that a reducing agent liquid is guided from a reductant supply unit directly to the exhaust gas or a reducing agent liquid is guided through a non-heated reactor to the exhaust gas.

Valves may also be set such that a reducing agent liquid is not allowed to be guided directly from a reductant supply unit to the exhaust gas.

Preferably the outputline is connected or connectable to a heating control unit of a heating system of the device. The control unit may hence initiate heating of the inner volume and/or the content of the reactor, for example for providing heated reducing agent liquid and/or reducing agent gas if needed.

The control unit may operate according to fixed operating procedure and provide control signals according to a predetermined scheme.

The control unit may for example during a first phase of operation with a typically low engine load provide an control signal for setting valves and pumps of the supply system and/or the reducing agent providing section such that reducing agent gas is provided.

In a second operating phase with a higher engine load the control signal may be altered to set valves and pumps of the supply system and/or the reducing agent providing section such that reducing agent liquid is provided.

The control unit may comprise an entry device, by which a user may set an operating mode to control the outputline.

In an advanced embodiment of the device the control unit is configured to provide the at least one control signal depending on the at least one input signal. The control unit may comprise a processor.

The control unit may use a lookup table or a processing scheme for determining the control signal depending on the at least one input signal.

In a preferred embodiment the device comprises at least one sensor for measuring at least one operating parameter.

Preferably the device is a device as described above and the sensor is connected or connectable to a sensor signal outputline which is connected or connectable to the inputline of the control unit.

Operating parameters measured by the sensor can thus be used by the control unit as in input signal.

The sensor may for example be a temperature sensor for measuring the temperature of the exhaust gas, in particular upstream and/or downstream of an SCR reactor.

Alternatively or additionally the device may comprise a sensor for measuring further operating parameters, the pressure in the cylinder, the pressure of the exhaust gas, the temperature difference of the exhaust gas upstream and downstream the SCR reactor, and/or ingredients of the exhaust gas.

The input signal may also be provided by an engine control unit, for example for transmitting information related to the engine load, and/or by an input terminal, for example for allowing a user to give instructions.

The reducing agent providing section may comprise at least one dosing unit for adjusting the amount of reducing agent to be dispensed.

The dosing unit may comprise an input line being connected or connectable to an output-line of the control unit for receiving a control signal sent by the control unit.

Hence the control unit may not only serve to determine the state of the reducing agent, such as liquid or gaseous, and the temperature of the reducing agent, but the control unit may also determine a control signal for adjusting the amount of reducing agent dispensed to the exhaust gas.

The dosing unit may comprise one dosage pump or two or more dosage pumps and/or one or two or more pumps with a dosage valve. Thereby, a feed stream of a reducing agent gas and/or a reducing agent liquid and/or a heated reducing agent liquid into the exhaust gas and/or a feed stream of a reducing agent liquid from the reductant supply unit to the reactor may be controlled.

The device may comprise a first dosing unit for setting the flow through and from the reductant supply unit and a second dosing unit for setting the flow through and from the reactor.

The device may comprise at least one pre-reactor for generating a reducing agent liquid from a solid reducing agent.

A solid reducing agent typically is easier to handle on a ship. Transport and storage can be managed without much effort.

In particular, solid urea is advantageous, because it is a stable, non-volatile material, which can be safely stored, transported and handled. Further, solid urea is available at a low cost.

The water, which is used for mixing, may be from a water separator of a marine vessel. The device may include a filter for filtering the water from the water separator.

The pre-reactor may comprise a mixing unit and a heating unit.

By heating a higher concentration is achieved in the reducing agent liquid.

Preferably the pre-reactor is integrated in the reducing agent providing section. The pre-reactor may be arranged in a common housing with the reactor or may be arranged separately.

The pre-reactor may be arranged upstream of the reactor.

The pre-reactor may be a part of the reductant supply unit.

The pre-reactor may be arranged upstream of the reductant supply unit for a reducing agent liquid and a reducing agent liquid produced in the pre-reactor may be guided to a pipeline or a reservoir of the reductant supply unit.

Additionally or alternatively, the pre-reactor may provide a reservoir for a reducing agent liquid.

The pre-reactor may provide a reducing agent liquid which may be guided directly to the exhaust gas when the pre-reactor is part of the reductant supply unit. Alternatively the pre-reactor may provide a reducing agent liquid which may be guided or may be passed to a reductant supply unit.

The pre-reactor may provide a reducing agent liquid which may be passed to the exhaust gas via the reducing agent providing section, in particular via the reactor.

Alternatively, a first pre-reactor may provide a reducing agent liquid which may be guided to the exhaust gas either directly or via a reductant supply unit. A second pre-reactor may provide a reducing agent liquid to be guided to the reactor.

In a preferred embodiment of the device the supply system comprises a first pipeline for guiding a reducing agent liquid and/or a reducing agent gas from the reducing agent providing section to the exhaust gas. Preferably the supply system comprises a pipe heating device, for example with heating elements.

The first pipeline may be arranged downstream of the reactor.

Additionally the device may comprise a second pipeline for guiding a reducing agent liquid from the reducing agent providing section to the exhaust gas.

The second pipeline may be arranged downstream of a reductant supply unit for a reducing agent liquid.

The first pipeline may have a diameter of 10-50mm and may be pressure resistant up to 80bar, preferably up to 2-50 bar, more preferably up to 2-40 bar. The first pipeline preferably is a double wall pipe.

The second pipeline may have a diameter of 5-30mm.

The first pipeline and the second pipeline may merge into a third pipeline, preferably upstream of an SCR reactor.

Alternatively the first pipeline and the second pipeline do not merge and remain separate pipelines until they lead into the exhaust gas system.

The supply system may be arranged for guiding the reducing agent liquid into a region downstream of the cylinder and upstream of the SCR reactor. In particular the second pipeline may be arranged to guide a reducing agent liquid into the exhaust gas system, for example an exhaust gas manifold, upstream of a SCR reactor.

The supply system may be arranged for guiding the reducing agent gas directly to an SCR reactor or to a region directly upstream the SCR reactor. In particular, the first pipeline may be arranged to guide a reducing agent gas directly to or closely upstream to an SCR reactor.

The first pipeline may be led to the inlet of the SCR reactor.

In a preferred embodiment the first and the second pipeline are arranged to guide a reducing agent to the exhaust gas system upstream of a SCR reactor.

In a preferential embodiment the supply system comprises a two-medium injection nozzle for delivering the reducing agent liquid.

The nozzle may comprise a least one inlet for a fluid, which preferably is connected to a liquid pipe and/or to a liquid reductant supply unit and at least one inlet for a gas which is connected to a gas pipe and/or to a gas reservoir, in particular to an air supply unit for providing pressurized air.

Pressurized air may be mixed with a reducing agent liquid in the nozzle, such that the reducing agent liquid is sprayed out of the nozzle and is distributed fine and equally.

The nozzle may be connected to a pipeline for guiding a reducing agent liquid, preferably to the first pipeline for guiding unheated reducing agent liquid and/or a second pipeline for guiding heated reducing agent liquid.

In a preferred embodiment the supply system comprises a two-medium injection nozzle for delivering both a reducing agent liquid and a reducing agent gas by the same nozzle and under respective appropriate conditions. Therefore, the nozzle may comprise a further opening for dispensing solely reducing agent gas.

The nozzle may comprise a switch, for example comprising a valve, for guiding the reducing agent to the respective outlet.

The supply system may comprise an air supply unit, which may be connected to the second pipeline or to a two medium injection nozzle.

The air supply unit preferably is arranged upstream of a two medium injection nozzle.

The air supply unit may be connectable to the reactor and to a reductant supply unit for a reducing agent liquid. In cases when operation of the engine is interrupted, the air supply may be used to clean the reactor and /or the reductant supply unit, as well as any pipelines of the supply system and the reducing agent providing section. Thus, any rests of a possibly toxic reducing agent as well as any unwanted residues can be removed.

The supply system may comprise a gas and/or steam dosing unit. The gas and/or steam dosing unit preferably is arranged downstream the reactor. The gas and/or steam dosing unit may be adapted to limit or to adjust the pressure in the reactor and/or the pressure of reducing agent gas leaving the reactor.

The device may comprise a pipe heating for the first pipeline, the second pipeline and/or the third pipeline. The pipe heating may heat the pipelines to up to 50°C, 60°C, 70°C, 80°C, 130°C or 145°C. By heating the pipelines, the energy consumption of the reactor is reduced and higher concentration of the reducing agents may be transported through the pipelines without damaging the pipelines.

When a pipeline is heated, for example an urea solution may comprise up to 77 weight% urea. Alternatively, the urea solution may only comprise 40 weight% urea.

In a heated pipeline the risk of forming a condensate or any other undesirable deposits is reduced.

The device may comprise a high pressure and/or in a high temperature vessel. Preferably the reactor is arranged in the high pressure and/or in a high temperature vessel. The reaction and the decomposition occur faster at higher temperatures.

The vessel may be adapted for pressures of up to 80 bar, preferably 2 to 50 bar, more preferably 2 to 40 bar, and /or for temperatures of up to 300°C.

The vessel may have an inner volume of smaller than 3200 litres, preferably smaller than 1600 litres and particularly preferred smaller than 200, 120 or 60 litres. Thereby, a small device with a low weight is provided. Such a device may be advantageous in applications such as marine applications, where space is limited.

The object is also achieved by an exhaust aftertreatment system comprising a device as described above and a selective catalytic reduction (SCR) reactor.

The object is also achieved by a combustion engine, preferably a two-stroke engine, comprising at least one cylinder, preferably a large vessel engine with at least one cylinder having an inner diameter of at least 200mm, and a device as described above or an exhaust aftertreatment system as described above.

The object is also achieved by a method for delivering a reducing agent, preferably for reduction of a pollutant, in particular NOₓ, in an exhaust gas of a combustion engine. The reducing agent is preferably provided in a device as described above.

The method comprises the step of adjusting a supply system being suitable for dispensing a reducing agent gas, preferably containing ammonia, and a reducing agent liquid, preferably comprising urea, and/or a reducing agent providing section to dispense a reducing agent gas, preferably containing ammonia, and/or a reducing agent liquid, preferably comprising urea.

The adjustment of the supply system and/or a reducing agent providing section may comprise setting at least one dosing pump, setting at least one dosing valve, providing an appropriate amount or rate of a reducing agent liquid, providing an appropriate amount or rate of a heated reducing agent liquid, providing an appropriate amount or rate of a reducing agent gas and/or heating a reducing agent liquid.

In a subsequent step the reducing agent gas and/or the reducing agent liquid is dispensed from a reducing agent providing section to the exhaust gas by the supply system.

Preferably for adjusting the supply system an injection mode is selected, preferably by a control unit.

After selection of a first injection mode the supply system and/or the reducing agent providing section are adjusted to provide reducing agent liquid.

After selection of a second injection mode the supply system and/or the reducing agent providing section are adjusted to provide reducing agent gas.

Preferably, after selection of a third injection mode the supply system and/or the reducing agent providing section are adjusted to provide a heated reducing agent liquid.

The respective reducing agent is provided in a reducing agent providing section and is guided into the exhaust gas of the combustion machine.

After selection of a respective injection mode, reducing agent liquid may be heated in the reducing agent providing section, such that heated reducing agent liquid and/or reducing agent gas may be provided.

At least one operating parameter, in particular the temperature of the exhaust gas, the engine power and/or the engine load, may be ascertained and the selection is dependent on at least one operating parameter.

At a preceding step a reducing agent solution may be mixed by solving solid reducing agent in water in a mixing tank of a pre-reactor.

Preferably the solution is pre-heated.

The reducing agent solution is preferably guided, in particular pumped, from the mixing tank to a reductant supply unit for a reducing agent liquid and/or to a reactor of the reducing agent providing section through an inlet piping, preferably through a heated pipe.

Alternatively the reducing agent solution may be mixed in in a reductant supply unit of the reducing agent providing section.

Further advantageous aspects of the invention are explained in the following by means of exemplary embodiments and the figure. In the drawing, in a schematic manner:

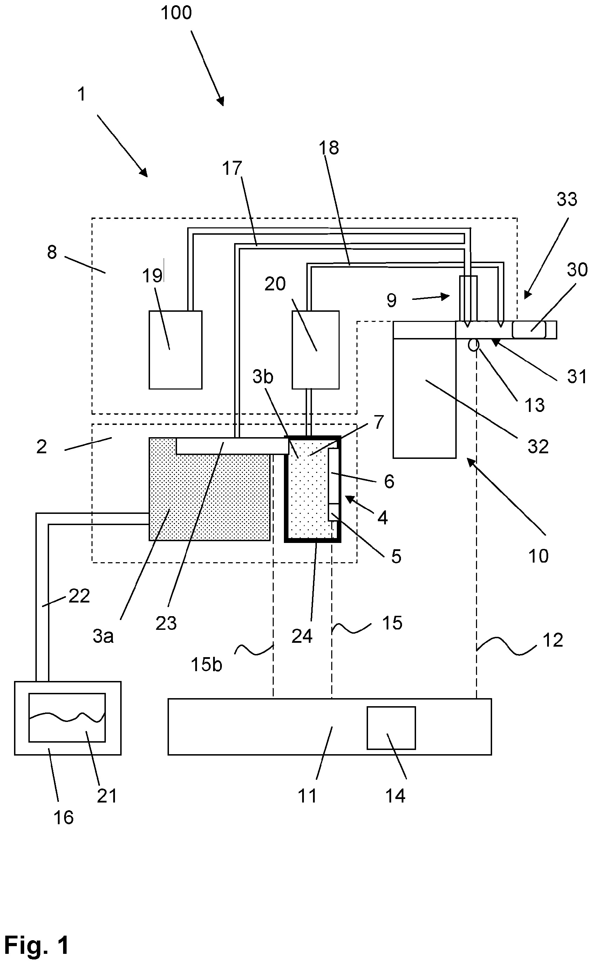

- Figure 1:: shows a schematic illustration of a first example of a combustion engine.

Figure 1 shows a schematic illustration of a first example of a combustion machine 100 with a cylinder 32 and an exhaust aftertreatment system 33 comprising a SCR reactor 30 and a device 1 for providing a reducing agent.

The reducing agent may reduce a pollutant, in particular NOₓ, in the exhaust gas of a combustion engine 10.

The device 1 comprises at least one reducing agent providing section 2 with a reactor 3b and a reductant supply unit 3a.

A reductant supply unit 3a may host a stock of a reducing agent liquid.

The device 1 comprises a heating system 4 with a heating control unit 5 and a heating element 6 for heating the inner volume and/or the content 7 of the reactor3b.

The reactor 3b may receive a reducing agent liquid from the reductant supply unit 3a, which after heating becomes a heated reducing agent liquid or may decomposed to a reducing agent gas. The reactor 3b is arranged in a high pressure and high temperature vessel 24.

The device 1 comprises a supply system 8, which is suitable for dispensing a reducing agent gas, preferably containing ammonia, and a reducing agent liquid, preferably comprising urea.

The supply system 8 dispenses the reducing agent gas and/or the reducing agent liquid, to the exhaust gas leaving the cylinder 32 of the engine 10, dependent on a selection by a control unit 11.

The supply system 8 comprises a two medium injection nozzle 9. The nozzle 9 is connected to the reductant supply unit 3a and to an air supply unit 19 for providing pressurized air. Hence, reducing agent liquid may be guided through a second pipeline 17 to the nozzle 9 and sprayed into a region 31 upstream of an SCR reactor 30 with pressurized air supplied by the air supply unit 19.

A reducing agent gas produced in the reactor 3b may be guided through a first pipeline 18 to a region 31 between the cylinder 32 and the SCR reactor 30, directly to or closed to an SCR reactor 30.

When a reducing agent liquid is dispensed to the region 31 between the cylinder 32 and the SCR reactor 30, the reducing agent liquid needs time to decompose. More time is needed when the exhaust temperature is low.

When the engine 32 works with high load and the exhaust gas temperature is high, reducing agent liquid may be dispensed upstream of the SCR reactor 30 and close to the SCR reactor 30, because the liquid will decompose fast with a high temperature exhaust gas.

With lower temperatures of the exhaust gas, decomposition of a cold reducing agent liquid would take more time and thus a larger flow path is needed for the liquid to decompose before reaching the SCR reactor. However, with the present device, for lower exhaust temperatures, heated reducing agent liquid may be injected, which decomposes faster and does not need extra space to decompose.

With even lower temperatures of the exhaust gas, a reducing agent gas may be dispensed, which does not need any space for decomposition. Thus, the space upstream the SCR reactor may be minimized.

A reducing agent gas may in any cases be dispensed very close to the SCR reactor.

Thus the distance between the cylinder 32 and the SCR reactor 30 can be designed with a relatively small size.

A gas and/or steam dosing unit 20 is arranged downstream the reactor 3b. The gas and/or steam dosing unit may adjust the pressure and/or temperature of the reducing agent gas leaving the reactor 3b via first pipeline 18.

The device 1 comprises a control unit 11.

The control unit 11 has an inputline 12 for receiving at least one input signal from a measuring unit 13.

The control unit 11 has a processor unit 14 and an outputline 15 for sending at least one control signal for adjusting the educing agent providing section 2.

The outputline 15 is connected to a heating control unit 5 of a heating system 4 of the reactor 3b.

The device 1 comprises a dosing unit 23 for setting pumps and/or valves (not explicitly shown in the figure) which allow guiding a respective reducing agent to a region 31 upstream of the SCR reactor 30 of the engine 10. The dosing unit 23 may for example set a valve allowing reducing agent liquid to be guided into the reactor 3b for being heated and/or being evaporated or set a valve for allowing reducing agent liquid to be guided directly from the reductant supply unit 3a to a region 31 upstream of the SCR reactor 30.

The dosing unit 23 may also set pumps and/or valves to determining the total amount of the total rate of reducing agent dispended to the exhaust gas.

A further outputline 15b is connected to the dosing unit 23.

Depending on the at least one input signal received form a sensor 13 by the inputline 12 the control unit 11 is configured to provide the at least one control signal to the outputlines 15, 15b.

The device 1 comprises a pre-reactor 16 for generating a reducing agent liquid from a solid reducing agent. The pre-reactor 16 may be integrated in the reducing agent providing section 2. In this example the pre-reactor 16 is arranged separately and upstream the reductant supply unit 3a.

## Claims

1. Device(1) for delivering a reducing agent, preferably for reduction of a pollutant, in particular NOₓ, in an exhaust gas of a combustion engine (10), comprising:
- at least one reducing agent providing section (2), comprising at least one reactor (3b), preferably having a heating system (4) with a heating control unit (5) and a heating element (6) for heating at least an inner volume and/or a content (7) of the reactor (3b), and comprising a reductant supply unit (3a) for a reducing agent liquid,
- the device (1) further comprising a supply system (8), which is suitable for dispensing a reducing agent gas, preferably containing ammonia, and a reducing agent liquid, preferably comprising urea, to the exhaust gas,
**characterized in that**
the device (1) comprises a control unit (11) adapted for selection of in an injection mode, wherein at least a first injection mode corresponds to providing a reducing agent liquid and a second injection mode corresponds to providing a reducing agent gas,
the control unit (11) having at least one inputline (12) for receiving at least one input signal, preferably an input signal from a measuring unit (13),
having a processor unit (14) and
having a at least one outputline (15, 15b) for sending at least one control signal for adjusting the supply system (8) and/or the reducing agent providing section (2) to dispend a reducing agent liquid and/or a reducing agent gas.

2. Device according to claim 1, wherein the outputline (15, 15b) is connected or connectable to the heating control unit (5) of a heating system (4) of the reactor (3b).

3. Device according to claim 1 or 2, wherein the control unit (11) is configured to provide the at least one control signal depending on the at least one input signal.

4. Device according to one of the preceding claims, wherein the device (1) comprises at least one sensor (13) for measuring at least one operating parameter, for example a temperature sensor (13) for measuring the temperature of the exhaust gas,
preferably the sensor (13) comprises a sensor signal outputline being connected or connectable to the inputline (12) of the control unit (11).

5. Device according to one of the preceding claims, wherein the device, preferably the reducing agent providing section (2), comprises at least one dosing unit (23) for adjusting the amount of reducing agent to be dispensed, preferably comprising an input line for receiving a control signal sent by the control unit (11).

6. Device according to one of the preceding claims, wherein the device (1) comprises a pre-reactor (16) for generating a reducing agent liquid from a solid reducing agent, preferably integrated in the reducing agent providing section (2).

7. Device according to one of the preceding claims, wherein the supply system (8) comprises
a first pipeline (18) for guiding a reducing agent liquid and/or a reducing agent gas from the reducing agent providing section (2), preferably from a reactor, to the exhaust gas, the supply system (8) preferably comprising a pipe heating device
and/or
wherein the supply system (8) comprises a second pipeline (17) for guiding a reducing agent liquid from the reducing agent providing section (2), preferably from a reductant supply unit, to the exhaust gas.

8. Device according to one of the preceding claims, wherein the supply system (8) is arranged for guiding the reducing agent liquid into a region (31) between the cylinder (32) and the SRC reactor (30)
and/or
the supply system (8) is arranged for guiding the reducing agent gas directly to or into the immediate vicinity of an SCR reactor.

9. Device according to one of the preceding claims,
wherein the supply system (8) comprises an air supply unit (19), preferably arranged upstream of a two medium injection nozzle (9),
and/or
wherein the supply system (8) comprises a gas and/or steam dosing unit (20), preferably arranged downstream the reactor (3b) of the reducing agent providing section (2).

10. Exhaust aftertreatment system comprising a device (1) according to at least one of the preceding claims and a selective catalytic reduction (SCR) reactor (30).

11. Combustion engine, preferably a two-stroke engine, comprising at least one cylinder (32), preferably a large vessel engine with at least one cylinder having an inner diameter of at least 200mm, and a device (1) according to one of the preceding claims 1-9 and/or an exhaust aftertreatment system (33) according to claim 10.

12. Method for delivering a reducing agent, preferably for reduction of a pollutant, in particular NOₓ, in an exhaust gas of a combustion engine (10), preferably in a device (1) according to claims 1-9, comprising the steps of adjusting a supply system (8) and/or a reducing agent providing section (2) to dispense either a reducing agent gas, preferably containing ammonia, or a reducing agent liquid, preferably comprising urea or a reducing agent gas and a reducing agent liquid;
dispensing the reducing agent gas and/or the reducing agent liquid from the reducing agent providing section (2) by the supply system (8) to the exhaust gas.

13. Method according to claim 12, comprising the steps of:
- Selection of in an injection mode, preferably by a control unit (11),
- wherein after selection of a first injection mode the supply system (8) and/or reducing agent providing section (2) are adjusted to provide a reducing agent liquid,
- after selection of a second injection mode the supply system (8) and/or reducing agent providing section (2) are adjusted to provide a reducing agent gas and
- preferably after selection of a third injection mode the supply system (8) and/or reducing agent providing section (2) are adjusted to provide a heated reducing agent liquid;
- and wherein the respective reducing agent is guided into the exhaust gas of the combustion machine.

14. Method according to claim 13, wherein at least one operating parameter is ascertained, in particular the temperature of the exhaust gas, the engine power and/or the engine load, and the selection is dependent on at least one operating parameter.

15. Method according to one of claim 13-15, wherein the method further comprises the step of:
- Mixing the reducing agent solution by solving solid reducing agent in water in a mixing tank (21) of a pre-reactor (16), preferably pre-heating the solution;
- Preferably guiding, in particular pumping, the reducing agent solution from the mixing tank (21) to a reductant supply unit for a reducing agent (3a) liquid and/or to a reactor (3b) of the reducing agent providing section (2) through an inlet piping (22), preferably through a heated pipe.
